**Europäisches Patentamt**

**European Patent Office**

**Office européen des brevets**

(19)

(11) Veröffentlichungsnummer: **0 118 702**
**B1**

(12)

# EUROPÄISCHE PATENTSCHRIFT

(45) Veröffentlichungstag der Patentschrift:
29.04.87

(51) Int. Cl.⁴: **C 04 B 35/58, B 22 F 3/14**

(21) Anmeldenummer: **84100650.1**

(22) Anmeldetag: **27.01.84**

(54) Verfahren zur Herstellung eines Gegenstandes aus pulverförmigem Material durch isostatisches Pressen.

(30) Priorität: 08.02.83 SE 8300645

(43) Veröffentlichungstag der Anmeldung:
19.09.84 Patentblatt 84/38

(45) Bekanntmachung des Hinweises auf die Patenterteilung:
29.04.87 Patentblatt 87/18

(84) Benannte Vertragsstaaten:
AT DE FR GB IT

(56) Entgegenhaltungen:
EP-A-0 035 784
EP-A-0 053 753
FR-A-1 585 240
FR-A-2 444 523

(73) Patentinhaber: ASEA AB, S-721 83 Västeras (SE)

(72) Erfinder: Adlerborn, Jan, Granbacken 10, S-915 00
Robertsfors (SE)
Erfinder: Larker, Hans, Phil. Dr., Prästvägen 4,
S-915 00 Robertsfors (SE)
Erfinder: Nilsson, Jan, Dipl.- Ing., Lövstigen 1,
S-915 00 Robertsfors (SE)
Erfinder: Mattson, Bertil, Granbacken 3, S-915 00
Robertsfors (SE)

(74) Vertreter: Boecker, Joachim, Dr.- Ing.,
Rathenauplatz 2-8, D-6000 Frankfurt a.M. 1 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zur Herstellung eines Gegenstandes aus pulverförmigem Material durch isostatisches Pressen eines aus dem pulverförmigen Material vorgeformten Pulverkörpers gemäß dem Oberbegriff des Anspruches 1.

Wenn der vorgeformte Pulverkörper bei der Sintertemperatur isostatisch gepreßt wird, dann muß er zur Erzielung eines dichten gesinterten Produktes in eine Hülle eingeschlossen werden, die während des Pressens verhindert, daß das verwendete Druckmittel, gewöhnlich ein Gas, in den Pulverkörper eindringt. Die Hülle und ihr Inhalt werden normalerweise vor dem Verschließen der Hülle in einem Arbeitsvorgang von nicht erwünschten Gasen befreit. Zur Herstellung der Hülle sind verschiedene Verfahren bekannt. Gemäß einem dieser Verfahren wird als Hülle eine vorgeformte Kapsel aus Glas verwendet. Gemäß einem anderen bekannten Verfahren wird die Hülle direkt auf dem Pulverkörper gebildet, in dem dieser in eine Aufschlämmung aus Glaspartikeln getaucht wird oder auf andere Weise mit einer Schicht aus Glaspartikeln überzogen wird und anschließend im Vakuum bei einer solchen Temperatur erwärmt wird, daß die Partikel eine dichte Hülle um den Körper bilden. Evtl. werden zwei solcher Glasschichten aufgebracht, wobei das Glas jeder Schicht einen anderen Schmelzpunkt hat. In der DE-OS 29 50 158 wird ein Verfahren zur Herstellung einer dichten Hülle aus einer Glasschmelze beschrieben, gemäß welchem der vorgeformte, in eine Masse aus Glaspartikeln eingebettete Pulverkörper in einem hitzebeständigen Gefäß plaziert wird und die Masse in eine Schmelze übergeführt wird, unter deren Oberfläche der vorgeformte Pulverkörper liegt, wenn der für das isostatische Pressen erforderliche Druck mittels eines Gases auf die Schmelze ausgeübt wird. In der genannten DE-OS 29 50 158 wird gesagt, daß sich ein Boroxyd enthaltendes Glas zur Herstellung einer Hülle für einen vorgeformte Pulverkörper aus Siliziumnitrid eignet, da es sich bei der Anwendung eines solchen Glases als möglich erwiesen hat, das Eindringen von geschmolzenem Glas in einen Pulverkörper aus Siliziumnitrid zu vermeiden. Als mögliche Erklärung dafür, daß ein borhaltiges Glas nicht in den Siliziumnitridkörper eindringt, wird die Bildung einer Borstickstoffverbindung, wahrscheinlich Bornitrid, an der Grenzfläche zwischen dem Glas und dem Siliziumnitrid verantwortlich gemacht, bevor das Glas eine niedrigviskose Schmelze bildet, und daß diese Borstickstoffverbindung dem Eindringen des Glases in die Poren des Pulverkörpers entgegenwirkt. Es wird angegeben, daß der Gehalt an $B_2O_3$ im Glas zwischen 2 und 70 Gewichtsprozent liegen kann.

Nach dem isostatischen Pressen ist der fertige Gegenstand, nachdem er abgekühlt ist, in der erstarrten Hülle aus Glas eingebettet. Die Hülle muß normalerweise durch Sandstrahlbeblasung entfernt werden, damit der Gegenstand bei der Entfernung der Hülle nicht beschädigt wird. In bestimmten Fällen ist es möglich, den Hauptteil der Hülle dadurch zu entfernen, daß man sie auf eine Temperatur erhitzt, bei der das Glas so dünnflüssig wird, daß der größte Teil desselben abzurinnen vermag und nur eine dünne Haut auf dem Gegenstand zurückbleibt, die durch Sandstrahlbeblasung entfernt wird. Auch Beizen kann angewendet werden. Die Entfernung der Hülle ist zeitraubend und stellt besonders bei Gegenständen mit einer komplizierten Form einen außerordentlich schwierigen Arbeitsvorgang dar.

Der vorliegenden Erfindung liegt die Aufgabe zugrunde, ein Verfahren der eingangs genannten Art zu entwickeln, bei dem die Hülle von dem isostatisch gepreßten Gegenstand wesentlich einfacher entfernbar ist, als bei dem bekannten Verfahren.

Zur Lösung dieser Aufgabe wird gemäß der Erfindung ein Verfahren nach dem Oberbegriff des Anspruch 1 vorgeschlagen, welches erfindungsgemäß die im kennzeichnenden Teil des Anspruch 1 genannten Merkmale hat.

Vorteilhafte Ausgestaltungen der Erfindung sind in den weiteren Ansprüchen genannt.

Gemäß der Erfindung wird die Entfernung der Hülle durch Verwendung von Wasser oder Wasserdampf ermöglicht. In solchen Fällen, in denen die Hülle partiell dadurch entfernt werden kann, daß man sie schmilzt und abrinnen läßt, kann gemäß der Erfindung die Hülle bei wesentlich niedrigeren Temperaturen entfernt werden, als dies mit den bekannten Verfahren möglich ist.

Das Material der Hülle kann aus reinem Boroxyd bestehen. Wenn es aus einem boroxydhaltigen Glas oder aus bei Erhitzung glasbildendem Material besteht, beträgt der Boroxydgehalt zweckmäßig mindestens 30 Gewichtsprozent und vorzugsweise mindestens 50 Gewichtsprozent.

Als Beispiel für Glas oder glasbildendes Material können Mischungen von $B_2O_3$ mit anderen Oxyden, wie z.B. Alkali- und Erdalkalimetalloxyden sowie Lanthanidenmetalloxyden, $SiO_2$, $GeO_2$, $Y_2O_3$ und $Al_2O_3$ genannt werden. Die Viskosität des Glases bzw. des beim Erhitzen gebildeten Glases liegt zweckmäßigerweise bei höchstens $= 10^3$ Pa s ($10^4$ Poises) bei ungefähr 1 000 Grad C. Hierdurch wird die partielle Entfernung der Hülle erleichtert, indem man sie schmilzt und von dem fertigen Gegenstand abrinnen läßt.

Die Wärmebehandlung zur Sicherstellung der Bildung von Bornitrid auf der Oberfläche des vorgeformten Pulverkörpers durch Reaktion des Nitrids des keramischen Materials der Oberflächenschicht des vorgeformten Pulverkörpers mit dem Boroxyd in der Hülle wird bei mindestens 900 Grad C, vorzugsweise bei mindestens 1 100 Grad C, vorgenommen.

Das pulverförmige Material ist vorzugsweise ein keramisches Material oder ein metallisches Material. Als Beispiel für keramische Materialien, bei welchen die vorliegende Erfindung anwendbar ist, können Nitride, wie z.B. Siliziumnitrid, Siliziumaluminiumoxydnitrid, Aluminiumnitrid, Titannitrid, Zirkoniumnitrid, Metalloxyde, wie z. B. Aluminiumoxyd, Zirkoniumoxyd, sowohl ganz wie partiell stabilisiert, Magnesiumoxyd, Karbide, wie z.B. Siliziumkarbid, Titankarbid, Boride, wie z. B. Titanborid, Zirkoniumborid, sowie Mischungen aus solchen Materialien genannt werden.

Als Beispiel für metallische Materialien können u.a. Stahl, eine auf Eisen basierende Legierung, wie z.B. 3 % Cr-Mo-Stahl, enthaltend 0,33 % C, 0,30 % Si, 0,40 % Mn, 0,01 % P, 0,01 % S, 2,8 % Cr, 0,6 % Mo, Rest Fe, oder 12 % Cr-Mo-V-Nb-Stahl, enthaltend 0,18 % C, 0,25 % Si, 0,60 % Mn, 0,01 % P, 0,01 % S, 11,5 % Cr, 0,5 % Ni, 0,5 % Mo, 0,30 % V, 0,25 % Nb, Rest Fe, oder eine Legierung, enthaltend 1,27 % C, 0,3 % Si, 0,3 % Mn, 6,4 % W, 5,0 % Mo, 3,1 % V, 4,2 % Cr, Rest Fe, oder eine auf Nickel basierende Legierung, wie z.B. eine Legierung, enthaltend 0,03 % C,15 % Cr, 17 % Co, 5 % Mo, 3,5 % Ti, 4,4 % Al, 0,03 % B, Rest Ni, oder eine Legierung, enthaltend 0,06 % C, 12 % Cr, 17 % Co, 3 % Mo, 0,06 % Zr, 4,7 % Ti, 5,3 % Al, 0,014 % B, 1,0 % V, Rest Ni, genannt werden. Die vorstehend und nachstehend in Prozent angegebenen Gehalte sind Gewichtsprozente.

Die vorliegende Erfindung kann auch bei zusammengesetzten Produkten angewendet werden, bei denen zumindest ein Teil aus pulverförmigem Ausgangsmaterial hergestellt ist.

Wenn das pulverförmige Material, aus dem der vorgeformte Pulverkörper hergestellt wird, ein metallisches Material oder ein anderes keramisches Material als ein Nitrid ist, so wird es gemäß der Erfindung mit einer Oberflächenschicht aus einem Nitrid, wie z.B. Siliziumnitrid, Chromnitrid oder Aluminiumnitrid versehen. Dies kann dadurch geschehen, daß der vorgeformte Pulverkörper in eine Aufschlämmung aus Siliziumnitrid oder ein anderes Nitrid in Alkohol, eventuell mit Bindemittel, z. B. Isopropanol mit 1 00 g/l Butylakrylat, getaucht oder damit besprizt wird, worauf der vorgeformte Pulverkörper getrocknet wird.

Gemäß einer bevorzugten Ausführungsform der Erfindung wird die Herstellung des Gegenstandes aus dem pulverförmige Material in der Weise durchgeführt, daß der vorgeformte Pulverkörper mit der umgebenden Hülle aus Boroxyd oder boroxydhaltigem Glas in ein offenes Gefäß gebracht wird, welches bei der für das pulverförmige Material angewendeten Sintertemperatur formbeständig ist. Die Hülle wird für das Druckmittel dadurch undurchlässig gemacht, daß sie in eine bis an die Wände des Gefäßes reichende Schmelze übergeführt wird, wobei der vorgeformte Pulverkörper unter der Oberfläche dieser Schmelze liegt, wenn der für das isostatisches Pressen erforderliche Druck mit dem Druckmittel auf die Schmelze aufgebracht wird. Um die Bildung einer Borstickstoffverbindung an der Oberfläche des Pulverkörper zu ermöglichen und damit das Eindringen von Hüllenbestandteilen in den Pulverkörper zu verhindern, wird dieser auf mindestens 900 Grad C, vorzugsweise auf mindestens 1 100 Grad C, erhitzt, bevor der für das isostatische Pressen erforderliche Druck auf die Schmelze aufgebracht wird. Das Druckmittel ist vorzugsweise ein Gas. Gemäß dieser Ausführungsform der Erfindung kann die Schmelze eine beliebig niedrige Viskosität annehmen und beim isostatischen Pressen ein hoher Druck angewendet werden, ohne daß die Gefahr besteht, daß an dem vorgeformten Pulverkörper Schäden auftreten, eine Gefahr, die bei den bekannten Verfahren insbesondere bei Gegenständen mit dünnen und schwachen Stellen sehr groß ist.

Druck und Temperatur für das isostatische Pressen und Sintern eines keramischen oder metallischen Materials hängen natürlich von der Art dieses Material ab. Normalerweise soll der Druck jedoch mindestens 100 Mpa und die Temperatur mindestens 1000 Grad C betragen.

Anhand eines Ausführungsbeispiels und der Figuren soll die Erfindung näher erläutert werden. Es zeigen

Figur 1 einen aus pulverförmigem Material vorgeformten Pulverkörper in Form eines Turbinenrades für einen Gasturbinenmotor, von oben gesehen,

Figur 2 den vorgeformten Pulverkörper gemäß Figur 1 im axialen Schnitt,

Figur 3 den vorgeformten Pulverkörper gemäß Figur 1 und 2 angeordnet in einem formbeständigen Gefäß und eingebettet in einer Masse aus Partikeln eines Materials, das eine für das Druckmittel undurchlässige Hülle bilden soll.

Siliziumnitridpulver mit einer Pulverkorngröße von weniger als 5 µm, das ca. 0,5 Gewichtsprozent freies Silizium und ca 1 Gewichtsprozent Yttriumoxyd enthält, wird in einer Kapsel aus Kunststoff, z.b. weichgemachtes Polyvinylchlorid, oder Gummi eingefüllt, welche ungefähr die Form des herzustellenden vorgeformten Pulverkörpers hat. Die Kapsel wird dann verschlossen und etwa 5 Minuten lang bei 600 Mpa kompaktiert. Nach beendeter Kompaktierung wird die Kapsel entfernt, und dem so gewonnenen vorgeformten Pulverkörper wird durch Werkzeugmaschinenbearbeitung die gewünschte Form gegeben. Die Dichte des Pulverkörpers beträgt ca. 60 % der theoretisch möglichen größten Dichte.

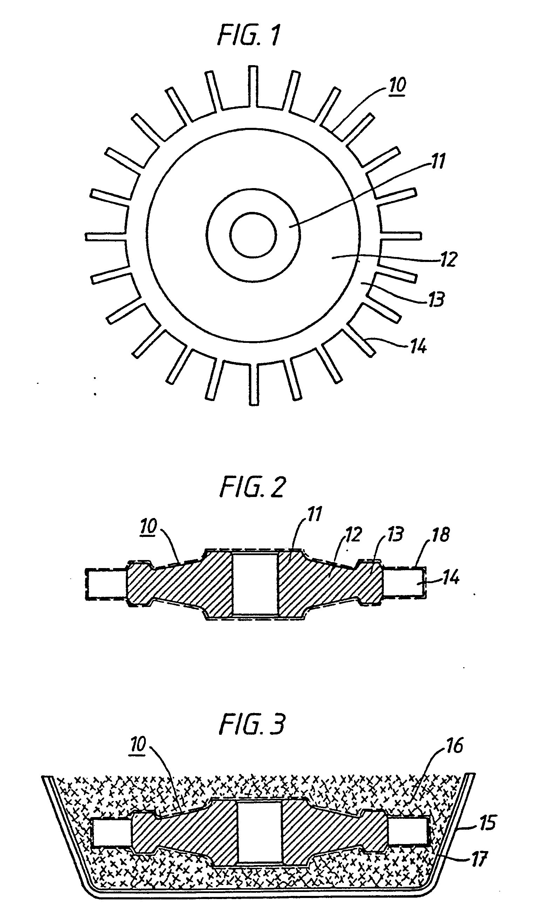

Der in Figur 1 und 2 gezeigte vorgeformte Pulverkörper 10 ist ein Turbinenrad mit Nabe 11, Radscheibe 12, Radkranz 13 und Schaufeln 14.

Wie aus Figur 3 hervorgeht, wird der Pulverkörper in einem oben offenen Gefäß 15 angeordnet, das bei der angewandten Sintertemperatur formbeständig ist, und in ein Pulver 16 aus reinem Boroxyd eingebettet. Das Gefäß besteht in dem gewählten Fall aus Graphit und ist an seiner Innenseite mit einer Trennmittelschicht 17 aus Bornitrid versehen. Wenn der Boden des Gefäßes nicht gasdicht ist, wird eine Platte aus gasdichtem Graphit, gasdichtem Bornitrid oder Molybdänfolie auf den Boden gelegt, bevor die Trennmittelschicht 17 aufgebracht wird. Die Hülle, die den vorgeformten Pulverkörper 10 umgibt, besteht in diesem Fall somit aus Partikeln aus Boroxyd.

Danach werden ein oder mehrere Gefäße 15 in einen Hochdruckofen bekannter Art eingebracht, der mit einer Leitung versehen ist, durch welche sowohl Gas bei der Entgasung des Gefäßes und seines Inhaltes geleitet werden kann als auch Gas, zweckmäßigerweise Argon, Helium oder Stickstoff, zur Erzeugung des erforderlichen Druckes für das isostatische Pressen zugeführt werden kann, und der mit Vorrichtungen zur Erwärmung des Ofens versehen ist. In dem Hochdruckofen wird zuerst der vorgeformte Pulverkörper 10 mit dem ihn umgebenden Pulver 16 aus Boroxyd ungefähr zwei Stunden lang entgast. Während der weiteren Evakuierung wird die Temperatur auf ca. 600 Grad C erhöht. Die Temperaturerhöhung erfolgt so langsam, daß der Druck während eines Teils der Zeit = 13,3 Pa (0,1 Torr) nicht übersteigt. Bei ungefähr 600 Grad C wird die Temperatur ca. 1 Stunde lang konstant gehalten, wobei die endgültige Entgasung erfolgt und das Boroxydpulver eine Schmelze mit niedriger Viskosität bildet, die den Pulverkörper ganz umgibt. Danach werden Argon, Helium oder Stickstoff zugeführt, so daß der Druck 0,1 Mpa beträgt, und die Temperatur wird auf 1150 Grad C erhöht und 1 Stunde auf diesem Wert gehalten. Nach dieser Behandlung hat sich eine Oberflächenschicht aus Bornitrid auf dem vorgeformten Pulverkörper 10 gebildet. Danach wird bei derselben Temperatur Argon, Helium oder Stickstoff mit einem solchen Druck zugeführt, das sich bei der endgültigen Sintertemperatur ein Druck von 200 bis 300 Mpa ergibt. Danach wird die Temperatur für die Dauer einer Stunde auf 1700-1800 Grad C, d.h. auf eine zweckmäßige Sintertemperatur für das Siliziunnitrid, erhöht. Dabei steigt gleichzeitig der Druck. Eine zweckmäßige Dauer für das Sintern unter den genannten Bedingungen sind mindestens 2 Stunden. Nach beendetem Zyklus läßt man den Ofen auf eine geeignete Dechargierungstemperatur abkühlen. Das Gefäß 15 enthält dann einen glatten Kuchen, in dem der Pulverkörper durch das erstarrte und glasklare Boroxyd sichtbar ist. Der Pulverkörper ist vollständig in dem Boroxyd eingebettet; er befand sich somit während des Pressens vollständig unter der Oberfläche der Schmelze. Dadurch, daß der für das Pressen erforderliche hohe Druck aufgebracht werden kann, wenn die Schmelze niedrigviskos ist, können fehlerfreie Gegenstände mit guter Reproduzierbarkeit hergestellt werden. Aufgrund der Trennmittelschicht 17 löst sich der Kuchen leicht vom Gefäß. Die Hülle aus Boroxyd kann durch Auslaugen mit warmem Wasser, das eventuell mit NaOH oder einer anderen alkalischen Verbindung versetzt ist, oder durch Bespritzen mit Wasserdampf entfernt werden. Die Wasserauslaugung kann alternativ in einem Autoklaven bei erhöhter Temperatur durchgeführt werden. Alternativ wird die Hülle partiell dadurch entfernt, daß der Kuchen auf ca. 600 Grad C erhitzt wird, so daß das Boroxyd weich wird und ein Teil des Boroxyds von dem fertigen Gegenstand abrinnt und nur eine Haut aus Boroxyd auf diesem zurückbleibt. Diese Haut kann, wie oben erwähnt, mit Wasser oder Wasserdampf von dem Gegenstand entfernt werden. Alternativ kann ein Teil des Boroxyds beim Abkühlen des fertigen Gegenstandes entfernt werden, während die Viskosität der Schmelze noch niedrig genug ist.

In einer alternativen Ausführungsform der Erfindung wird ein Glas verwendet, das 90 Gewichtsprozent $B_2O_3$, 5 Gewichtsprozent $SiO_2$, 4 Gewichtsprozent MgO und 1 Gewichtsprozent $Al_2O_3$ enthält. Da dieses Glas einen höheren Schmelzpunkt als das Glas in dem vorstehenden Beispiel hat, erfolgt die endgültige Entgasung bei 900 Grad C. Im übrigen werden dieselben Bedingungen wie in dem vorstehenden Beispiel angewendet.

Dasselbe Verfahren, das oben für die Herstellung eines Turbinenrades aus Siliziumnitrid beschrieben wurde, kann in modifizierter Form für die Herstellung eines Turbinenrades aus Siliziumkarbid verwendet werden. In diesem Fall wird der vorgeformte Pulverkörper mit einer Oberflächenschicht 18 aus Siliziumnitrid belegt, bevor er in dem Gefäß 15 plaziert wird. Zum Aufbringen der Oberflächenschicht kann einen Aufschlämmung aus Siliziumnitrid mit einer unter 5 μm liegenden Korngröße in Isopropanol mit 100 g/l Butylakrylat mit einer breiähnlichen Konsistenz verwendet werden. Nach dem Trocknen hat der Belag eine Dicke von ungefähr 0,2 mm. Die Siliziumnitridschicht wird effektiv an dem vorgeformten Pulverkörper verankert und bildet Bornitrid an der Kontaktfläche mit dem Boroxyd bei der Wärmebehandlung, welcher der vorgeformte Pulverkörper in dem Gefäß 15 vor dem isostatisches Pressen unterzogen wird. Das isostatische Pressen erfolgt bei einer Temperatur von 1900-2000 Grad C. Im übrigen können dieselben oben für Siliziumnitrid beschriebenen Bedingungen angewendet werden.

Dasselbe Verfahren, das oben für die Herstellung eines Turbinenrads aus Siliziumnitrid beschrieben wurde, wird in modifizierter Form bei der Herstellung eines Turbinenrads aus einem 12%-Cr-Mo-V-NB-Stahl verwendet, enthaltend 0,18 % C, 0,25 % Si, 0,60 % Mn, 0,01 % P, 0,01 % S, 11,5 % Cr, 0,5 % Ni, 0,5 % Mo, 0,30 % V, 0,25 % Nb, Rest Fe und mit einer Korngröße von weniger als 800 μm. Der vorgeformte Körper wird auf gleiche Weise wie oben für das Turbinenrad aus Siliziumkarbid beschrieben mit einer Oberflächenschicht aus Chromnitrid versehen. In diesem Fall wird die Wärmebehandlung zur Bildung von Bornitrid eine Stunde lang bei 1000 Grad C und das isostatische Pressen bei einer Temperatur von 1200 Grad C durchgeführt. Im übrigen können dieselben oben für das Siliziumkarbid beschriebenen Bedingungen angewendet werden.

Dasselbe Verfahren, das oben für die Herstellung eines Turbinenrads aus Siliziumkarbid beschrieben wurde, wird in modifizierter Form bei der Herstellung eines Fräsers aus Pulver angewendet, das aus einer auf Eisen basierenden Legierung mit der Zusammensetzung 1,27 % C, 0,3 % Si, 0,3 % Mn, 6,4 % W, 5,0 % Mo, 3,1 % V, 4,2 % Cr, Rest Fe besteht und eine Korngröße von weniger als 600 μm hat. Der vorgeformte Pulverkörper wird auf gleiche Weise, wie es für das Turbinenrad aus Siliziumkarbid beschrieben wurde, mit einer Oberflächenschicht aus Aluminiumnitrid versehen. In diesem Fall wird sowohl die Wärmebehandlung zur Bildung von Bornitrid als auch das isostatische Pressen bei einer Temperatur von 1150 Grad C durchgeführt. Im übrigen können dieselben oben für das Siliziumkarbid beschriebenen Bedingungen angewendet werden.

Dasselbe Verfahren, das oben für die Herstellung eines Turbinenrads aus Siliziumnitrid beschrieben wurde, wird in modifizierter Form für die Herstellung einer elektrischen Durchführung mit einem Isolierkörper aus keramischem Material verwendet. Eine zylindrische Elektrode aus einer auf Nickel basierenden Legierung mit 28 % Mo, 5 % Fe und Rest Ni, wird beim kalten isostatischen Pressen als Kern einer konzentrischen Hülle aus einem keramischen Pulver verwendet. Das Pulver besteht aus Zirkoniumoxyd mit 4,5 % Yttriumoxyd und hat eine Korngröße von weniger als 5 μm. Der gepreßte Körper wird geformt, und die Enden der Elektrode werden durch Werkzeugmaschinenbearbeitung von keramischem Material freigelegt. Der zusammengesetzte Körper wird auf gleiche Weise wie für das Turbinenrad aus Siliziumkarbid beschrieben mit einer Oberflächenschicht aus Siliziumnitrid versehen. In diesem Fall wird sowohl die Wärmebehandlung zur Bildung von Bornitrid als auch das isostatische Pressen bei einer Temperatur von 1200 Grad C durchgeführt. Im übrigen können dieselben oben für das Siliziumkarbid beschriebenen Bedingungen angewendet werden.

## Patentansprüche

1. Verfahren zur Herstellung eines Gegenstandes aus einem pulverförmigen Material durch isostatisches Pressen eines aus dem pulverförmiges Material vorgeformter Pulverkörpers (10), bei welchem der vorgeformter Pulverkörper (10), bei dem zumindest die Oberflächenschicht aus einem keramischen Material in Form eines Nitrids besteht, mit einer für das Druckmittel undurchlässigen boroxydhaltigen Hülle (16) umgeben wird, bevor das isostatische Pressen unter Sinterung des Pulvers vorgenommen wird, dadurch gekennzeichnet, daß als Material für die Hülle (16) Boroxyd, ein boroxydhaltiges Glas oder ein boroxydhaltiges, bei Erhitzung glasbildendes Material, in welchem der Boroxydgehalt hoch genug ist, verwendet wird, um das Glas bzw. das bei der Erhitzung gebildete Glas mit Wasser entfernen zu können, daß der von der Hülle (16) umgebene vorgeformte Pulverkörper (10) einer Wärmebehandlung zur Bildung von Bornitrid an der Oberfläche des vorgeformten Pulverkörpers (10) durch Reaktion des Nitrids in der Oberflächenschicht des vorgeformter Pulverkörper (10) mit dem Boroxyd in der Hülle (16) unterworfen wird, bevor das isostatische Pressen erfolgt, und daß zumindest der am dichtesten an dem hergestellten Gegenstand liegende Teil der Hülle mit Wasser oder Wasserdampf entfernt wird.

2. Verfahren nach Anspruch 1, dadurch gekennzeichnet, daß der Boroxydgehalt im Glas bzw. in dem bei der Erhitzung glasbildenden Material mindestens 30 Gewichtsprozent, vorzugsweise mindestens 50 Gewichtsprozent, beträgt.

3. Verfahren nach einem der vorhergehenden Ansprüche, dadurch gekennzeichnet, daß die Wärmebehandlung zur Bildung von Bornitrid an der Oberfläche des vorgeformter Pulverkörper (10) bei einer Mindesttemperatur von 900 Grad C erfolgt.

4. Verfahren nach einem der vorhergehenden Ansprüche, dadurch gekennzeichnet, daß das Material der Hülle (16) eine Viskosität von höchstens 1000 Pa s (10 000 Poises) bei 1 000 Grad C hat.

5. Verfahren nach einem der vorhergehenden Ansprüche, dadurch gekennzeichnet, daß der vorgeformte Pulverkörper (10) aus Siliziumnitrid oder aus einem Siliziumnitrid als Hauptbestandteil enthaltenden Material besteht.

6. Verfahren nach einem der Ansprüche 1 bis 4, dadurch gekennzeichnet, daß der vorgeformte Pulverkörper (10) aus einem keramischen oder metallischen Material besteht, das mit einem Überzug (18) aus einem Nitrid versehen ist.

7. Verfahren nach einem der vorhergehenden Ansprüche, dadurch gekennzeichnet, daß der vorgeformte Pulverkörper (10) und die Hülle (16), wenn letztere für das Druckmittel undurchlässig gemacht werden soll, in einem offenen Gefäß (15) plaziert werden, das bei der Sintertemperatur des pulverförmigen Materials formbeständig ist, und daß die Hülle (16) in eine bis an die Wände des Gefäßes reichende Schmelze übergeführt wird, unter deren Oberfläche der vorgeformter Pulverkörper (10) während des isostatisches Pressen liegt.

## Claims

1. Method of manufacturing a object of powdered material by isostatic pressing of a body (10) preformed of the powdered material, the preformed powder body (10), consisting at least in its surface layer of a ceramic material in the form of a nitride, being surrounded with a boron oxide containing envelope (16) which cannot be penetrated by the pressure medium, before the isostatic pressing with simultaneous sintering of the powder is carried out, characterized in that the material used in the envelope (16) is boron oxide, a glass containing boron oxide, or a boron oxide containing material that forms glass upon heating, in which material the boron oxide content is sufficiently high to make the glass or the glass formed upon heating, respectively, removable by water, that the preformed powder body (10), which is surrounded by the envelope (16), is subjected to a heat treatment for the forming of boron nitride on the surface of the preformed powder body (10) through reaction of the nitride in the surface layer of the preformed powder body (10) with the boron oxide in the envelope (16), prior to the isostatic pressing, and that at least that portion of the envelope is removed by water or water vapour, which is positioned nearest to the manufactured object.

2. Method according to claim 1, characterized in that the boron content in the glass or in the material forming glass upon heating, respectively, amounts to at least 30 per cent by weight, preferably at least 50 per cent.

3. Method according to any of the preceding claims, characterized in that the heat treatment for the formation of boron nitride on the surface of the preformed powder body (10) occurs at a minimum temperature of 900°C.

4. Method according to any of the preceding claims, characterized in that the material in the envelope (16) has a viscosity of at most 1000 Pas (10000 Poises) at 1000°C.

5. Method according to any of the preceding claims, characterized in that the preformed powder body (10) consists of silicon nitride or a material containing silicon nitride as the main component.

6. Method according to any of claims 1 to 4, characterized in that the preformed powder body (10) consists of a ceramic or a metallic material provided with the coating (18) of nitride.

7. Method according to any of the preceding claims, characterized in that the preformed powder body (10) and the envelope (16), for making the latter impermeable for the pressure medium, are placed in an open vessel (15), which is stable in shape at the sintering temperature of the powdered material, and that the envelope (16) is transformed into a melt extending to the walls of the vessel and below the surface of which the preformed powder body (10) is located during the isostatic pressing.

## Revendications

1. Procédé de fabrication d'un objet à partir d'une matière pulvérulente par compression isostatique d'une ébauche d'un corps pulvérulent (10), qui consiste à entourer l'ébauche du corps pulvérulent (10) dont au moins la couche superficielle est en une matière céramique sous forme d'un nitrure, d'une enveloppe (16) contenant un oxyde de bore imperméable au fluide sous pression, avant d'effectuer la compression isostatique avec frittage de la poudre, caractérisé en ce qu'il consiste à utiliser, comme matière pour l'enveloppe (16), de l'oxyde de bore, un verre contenant de l'oxyde de bore ou une matière vitrifiable par chauffage dont la teneur en oxyde de bore est suffisamment élevée pour pouvoir éliminer par de l'eau le verre ou le verre formé par chauffage, à soumettre l'ébauche du corps pulvérulent (10) entourée de l'enveloppe (16) à un traitement thermique pour former du nitrure de bore à la surface de l'ébauche du corps pulvérulent (10) par réaction du nitrure de la couche superficielle de l'ébauche pulvérulente (10) sur l'oxyde de bore de l'enveloppe (16), avant d'effectuer la pression isostatique et à éliminer, par de l'eau ou par de la vapeur d'eau, au moins la partie de l'enveloppe se trouvant le plus près de l'objet fabriqué.

2. Procédé suivant la revendication 1, caractérisé en ce que la teneur en oxyde de bore du verre ou de la matière vitrifiable par chauffage est d'au moins 30 % en poids et, de préférence, d'au moins 50 % en poids.

3. Procédé suivant l'une des revendications précédentes, caractérisé en ce qu'il consiste à effectuer le traitement thermique de formation du nitrure de bore à la surface de l'ébauche pulvérulente (10), à une température minimale de 900°C.

4. Procédé suivant l'une des revendications précédentes, caractérisé en ce que la matière de l'enveloppe (16) a une viscosité à 1000°C de 1000 Pas (10 000 Poises) au plus.

5. Procédé suivant l'une des revendications précédentes, caractérisé en ce que l'ébauche du corps pulvérulent (10) est en nitrure de silicium ou en une matière contenant du nitrure de silicium comme constituant principal.

6. Procédé suivant l'une des revendications 1 à 4, caractérisé en ce que l'ébauche du corps pulvérulent (10) est en une matière céramique ou métallique munie d'un revêtement (18) en nitrure.

7. Procédé suivant l'une des revendications précédentes, caractérisé en ce qu'il consiste à placer l'ébauche du corps pulvérulent (10) et l'enveloppe (16), quand cette dernière doit être rendue imperméable au fluide sous pression, dans un récipient (15) ouvert qui conserve sa forme à la température de frittage de la matière pulvérulente, et à transformer l'enveloppe (16) en une masse fondue allant jusqu'aux parois du récipient et en-dessous de la surface de laquelle l'ébauche du corps pulvérulent (10) se trouve pendant la compression isostatique.

## FIG. 1

## FIG. 2

## FIG. 3